# EUROPEAN PATENT APPLICATION

(11) **EP 1 263 233 A2**
(43) Date of publication of application: **04.12.2002**
(21) Application number: 02011917.8
(22) Date of filing: 29.05.2002
(51) Int. Cl.: H04N 7/24

(54) **Apparatus, method and program for content distribution**

(30) Priority: 31.05.2001 JP 2001164469
(71) Applicant: MATSUSHITA ELECTRIC INDUSTRIAL CO., LTD., Kadoma-shi, Osaka-fu (JP)
(72) Inventor: Miura, Koji, Matsubara-shi, Osaka-fu (JP)
(74) Representative: Gassner, Wolfgang, Dr.

(57) **Abstract**

A news content receiving terminal (102) transmits an identifier of a news content to be requested and a terminal capability level to a news content distribution server (101). A variation database (105) manages variations of each content for every receiving terminal capability level. Based on the variation database (105), a variation to be distributed is determined. A meta database (103) manages meta data of each content. A meta data interpreting section (107) parses the meta data to obtain the variation to be transmitted. A usage rule database (104) manages usage rules for every set of a news content and the receiving terminal capability level. Based on the usage rule database (104), the usage rule to be distributed is determined. Thus, the usage rule according to the variation of the content can be distributed.

## Description

### BACKGROUND OF THE INVENTION

### Field of the Invention

The present invention relates to content distribution apparatuses and, more specifically, a content distribution apparatus for distributing a content and its usage rule to a content receiving terminal.

### Description of the Background Art

In recent years, with the development of digital information compression techniques and the advent of a high-speed network infrastructures, various content distribution services have become available. Such various content distribution services include a music distribution service for distributing music contents through Web pages, and a marketing information distribution service using e-mails.

Also, devices capable of receiving content distribution services have been increasing in variety, such as personal computers (PCs), portable phones, car navigation systems, and satellite broadcasting receiving systems. These devices differ in capability of displaying contents. For example, some portable phones have a limited display size and a limited number of colors, and some cannot display images.

For distribution to such a wide variety of terminals, the contents may be translated according to the terminal's capability, or contents previously translated from the originals may be transmitted. For example, when the content to be distributed is a video content, the video content is distributed as it is to PCs. To portable terminals, however, the video content may be distributed as being reduced in image size or the number of frames due to the limited capability of the portable terminals. Moreover, to terminals not capable of playing back video, only a typical still picture may be distributed. As such, each distribution content has variations that are the same in substance but different in type from each other according to the receiving terminal.

The variations of the distribution content do not depend only on the capability of the receiving terminal. For example, if a path for distributing contents for streaming has a large volume of traffic, a variation of the content reduced in the number of frames may be distributed.

To efficiently manage the contents each having the above-stated variations in a content distribution server, an example method is suggested, wherein a plurality of variations of each distribution content and meta data representing those variations are previously stored and, based on the details represented by the meta data, the variation to be distributed is determined. A standard format of the meta data representing those content variations is, for example, MPEG (Motion Picture Experts Group)-7 standardized in ISO/IEC15938.

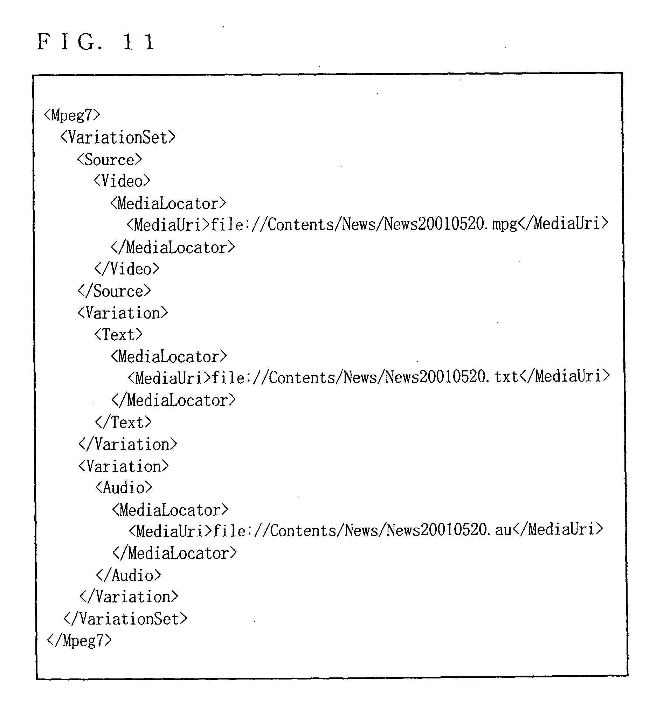

A simple example of the news content distribution service is described below. A news content distribution server manages news contents each having three types of variations: video, text, and audio. Also, the news content distribution server has information as to the variations of each news content, as exemplarily illustrated in FIG. 11. Such information is hereinafter referred to as meta data. FIG. 11 illustrates example variation information described in MPEG-7 format.

The variation information is now briefly described. The meta data is provided with <Mpeg7> tags at its head and end, and described therebetween are variations further sandwiched between <VariationSet> tags. The original content of the variations is described between <Source> tags, and each variation is described between <Variation> tags. The variation is represented by tags whose name indicates the relevant medium, such as "Video" or "Audio". Between these tags, the location of the variation is represented with <MediaLocator> tags and <MediaUri> tags. In the example of FIG. 11, the original content is "Video", and located at "/Contents/News/News20010520.mpg". The original content has two types of variations, text and audio, located at "/Contents/News/News20010520.txt" and "/Contents/News/News20010520.au", respectively.

As evident from FIG. 11, the meta data in MPEG-7 format is represented with an XML (extensible markup language) schemer. Therefore, the news content distribution server incorporates an XML parser capable of interpreting data represented with the XML schemer for obtaining data within tags.

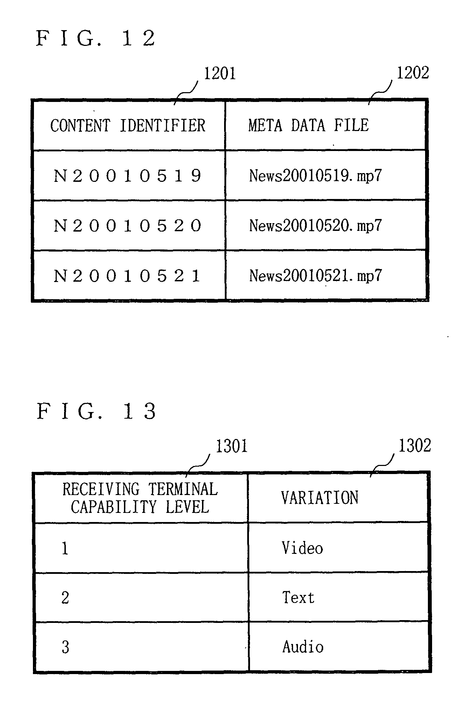

The meta data is managed by a file system on the news content distribution server (in the present example, a file name of the meta data is "News20010520.mp7"). Also, information for managing the relationship between the meta data and the original content is managed by a management database on the news content distribution server. This management information includes, as illustrated in FIG. 12, content identifiers 1201 of the original video contents and file names 1202 of the meta data. Furthermore, the news content distribution server manages a capability level of the receiving terminal and a content variation corresponding to the level, as illustrated in FIG. 13. In FIG. 13, managed are receiving terminal capability levels 1301 and variations 1302. In this example, the receiving terminal falls into any one of the following three level types according to the capability. Level 1 indicates a terminal capable of displaying video; Level 2 indicates a terminal capable of displaying only text; and Level 3 indicates a terminal capable of only producing audio. Each variation is represented by its tag name used in the meta data, as illustrated in the variations 1302 of FIG. 13.

In response to a content request from a news content receiving terminal, the news content distribution server returns the requested news content. The request from the receiving terminal is composed of a set of ("identifier of the requested content", "receiving terminal capability level"). On receiving the content request, the news content distribution server obtains the meta data corresponding to the identifier of the requested content, and also variations suited for the receiving terminal capability level. Then, from the variations, the suited one is retrieved based on the meta data, and then the location of the retrieved variation is obtained. Then, the variation of the content is distributed.

For example, when the content request from the news content receiving terminal indicates (N20010520, 2), that is, when the news content receiving terminal requests "N20010520" as the content identifier and "2" as the receiving terminal capability level, the news content distribution server determines, based on the database illustrated in FIG. 12, that the meta data file is "News20010520.mp7", and also determines, based on database illustrated in FIG. 13, that the variation to be distributed is "Text". Then, the XML parser parses the meta data file "News20010520.mp7" to determine, based on information between the <MediaUri> tags within that <Text> tags, that the content to be distributed is "/Contents/News/News20010520.txt". Then, the determined content is distributed.

In general, digital contents are easy to duplicate. Therefore, for content distribution services involving a billing process, content management is crucially important, because unauthorized duplication or tampering will provide tremendous disadvantages to service providers and authors protected by copyright. An example copyright management system in consideration of unauthorized duplication and tampering is disclosed in Japanese Patent Laid-Open Publication No. 7-131452 (1995-131452). In a content management system disclosed in this gazette, a terminal receives an encrypted content, usage rules thereof, and a decryption key. The terminal then checks to see whether the contents have been tampered with. The terminal then verifies the appropriateness of the usage rules. If all usage rules have been verified, the terminal decodes and outputs the contents.

The usage rule is information that limits the use of the content, designating the number of times of use, an expiration date, or others. A content distribution service provider designates the expiration date for realizing a rental service or changing a fee for the content according to the usage rule. This can advantageously achieve a wide variety of services. With this advantage, content distribution services often use such a usage rule. For example, each content is provided with a usage rule, such as "copy-permitted" or "30-second free playback", and is processed at the receiving terminal according to the provided usage rule.

Here, for a content having variations, their usage rule should be varied for each variation. By way of example only, consider a case where an original content is a video content provided with a usage rule "30-second free playback". When a variation, such as a still picture, of the original content is to be distributed, however, the provided usage rule is meaningless. Also consider another case where the original video content is provided with a usage rule "copy-permitted". Even in this case, when a variation of the content reduced in the number of frames is to be distributed, some content providers may desire to change the usage rule into "copy-unpermitted" for avoiding wide circulation of the content degraded in quality due to the reduction.

In the above content distribution system disclosed in Japanese Patent Laid-Open Publication No. 7-131452, however, the usage rule cannot be changed according to the variation of the content.

### SUMMARY OF THE INVENTION

Therefore, an object of the present invention is to provide a content distribution apparatus, a content distribution method, and a content distribution program capable of distributing a usage rule according to a variation of a content.

The present invention has the following features to attain the object mentioned above.

A first aspect of the present invention is directed to a content distribution apparatus for distributing a content and a usage rule of the content to a content receiving terminal, wherein
the content has a plurality of variations, and
the content distribution apparatus comprises:
a content managing section operable to manage the content;
a usage rule managing section operable to manage the usage rule of the content; and
a communications section operable to distribute, to the content receiving terminal, a predetermined one of the variations of the content managed by the content management section and the usage rule dynamically determined according to the predetermined variation.

In the first aspect, even if the content has a plurality of variations, the usage rule is not statically determined depending only on the content, but is dynamically determined according to the variation to be distributed. Therefore, the usage rule suited for the variation to be distributed can be distributed.

According to a second aspect, in the first aspect, the usage rule managing section manages the usage rule for each capability level of the content receiving terminal, and
the communications section distributes, to the content receiving terminal, the usage rule corresponding to the capability level of the content receiving terminal.

In the second aspect, the usage rule can be distributed according to the capability level of the content receiving terminal.

According to a third aspect, in the first aspect, the usage rule managing section manages the usage rule for each variation attribute indicating how the variation is related to the content, and
the communications section distributes, to the content receiving terminal, the usage rule corresponding to the variation attribute of the predetermined variation.

In the third aspect, the usage rule can be distributed according to the variation attribute.

According to a fourth aspect, in the first aspect, the content distribution apparatus further includes a meta data managing section operable to manage meta data indicating how the content is related to the plurality of variations, wherein
the variation to be distributed to the content receiving terminal is determined based on the meta data.

According to a fifth aspect, in the fourth aspect, the meta data complies with MPEG-7 standards, and
the variation to be distributed to the content receiving terminal is determined based on details described between variation tags in the meta data.

According to a sixth aspect, in the third aspect, the content distribution apparatus further includes a meta data managing section operable to manage meta data indicating how the content is related to the plurality of variations, wherein
the meta data complies with MPEG-7 standards, and
the variation to be distributed to the content receiving terminal is determined based on a variation attribute indicated between variation attribute tags in the meta data.

A seventh aspect of the present invention is directed to a content distribution method of distributing a content and a usage rule of the content to a content receiving terminal, wherein
the content has a plurality of variations, and
the content distribution method comprises:
a content managing step of managing the content;
a usage rule managing step of manage the usage rule of the content; and
a communicating step of distributing, to the content receiving terminal, a predetermined one of the variations of the content managed in the content management step and the usage rule dynamically determined according to the predetermined variation.

In the seventh aspect, even if the content has a plurality of variations, the usage rule suited for the variation to be distributed can be distributed.

According to an eighth aspect, in the seventh aspect, in the usage rule managing step, the usage rule is managed for each capability level of the content receiving terminal, and
in the communicating step, the usage rule corresponding to the capability level of the content receiving terminal is distributed to the content receiving terminal.

According to a ninth aspect, in the seventh aspect, in the usage rule managing step, the usage rule is managed for each variation attribute indicating how the variation is related to the content, and
in the communicating step, the usage rule corresponding to the variation attribute of the predetermined variation is distributed to the content receiving terminal.

According to a tenth aspect, in the seventh aspect, the content distribution method further includes meta data managing step of managing meta data indicating how the content is related to the plurality of variations, wherein
the variation to be distributed to the content receiving terminal is determined based on the meta data.

According to an eleventh aspect, in the tenth aspect, the meta data complies with MPEG-7 standards, and
the variation to be distributed to the content receiving terminal is determined based on details described between variations tags in the meta data.

According to a twelfth aspect, in the ninth aspect, the content distribution method further includes a meta data managing step of managing meta data indicating how the content is related to the plurality of variations, wherein
the meta data complies with MPEG-7 standards, and
the variation to be distributed to the content receiving terminal is determined based on a variation attribute indicated between variation attribute tags in the meta data.

A thirteenth aspect of the present invention is directed to a content distribution program executed by a computer for distributing a content having a plurality of variations and a usage rule of the content to a content receiving terminal, the program comprising:
a content managing step of managing the content;
a usage rule managing step of manage the usage rule of the content; and
a communicating step of distributing, to the content receiving terminal, a predetermined one of the variations of the content managed in the content management step and the usage rule dynamically determined according to the predetermined variation.

In the thirteenth aspect, even if the content has a plurality of variations, the usage rule suited for the variation to be distributed can be distributed.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram illustrating the configuration of a news content distribution system according to a first embodiment of the present invention;
FIG. 2A is an illustration showing an example ticket format in the first embodiment, and FIG. 2B is an illustration showing example usage rule identifiers in the first embodiment;
FIG. 3 is an illustration showing an example meta data database in the first embodiment;
FIG. 4 is an illustration showing an example usage rule database in the first embodiment;
FIG. 5 is an illustration showing an example variation database in the first embodiment;
FIG. 6 is a flowchart showing the procedure of news content distribution in the first embodiment;
FIG. 7 is a block diagram illustrating the configuration of a news content distribution system according to a second embodiment of the present invention;
FIG. 8 is an illustration showing an example usage rule database in the second embodiment;
FIG. 9 is a flowchart showing the procedure of news content distribution in the second embodiment;
FIG. 10 is an illustration showing example description of meta data in the second embodiment;
FIG. 11 is an illustration showing example description of conventional meta data;
FIG. 12 is an illustration showing an example conventional meta data database; and
FIG. 13 is an illustration showing an example conventional variation database.

### DESCRIPTION OF THE PREFERRED EMBODIMENTS

With reference to the drawings, described below are various embodiments of the present invention.

### (First embodiment)

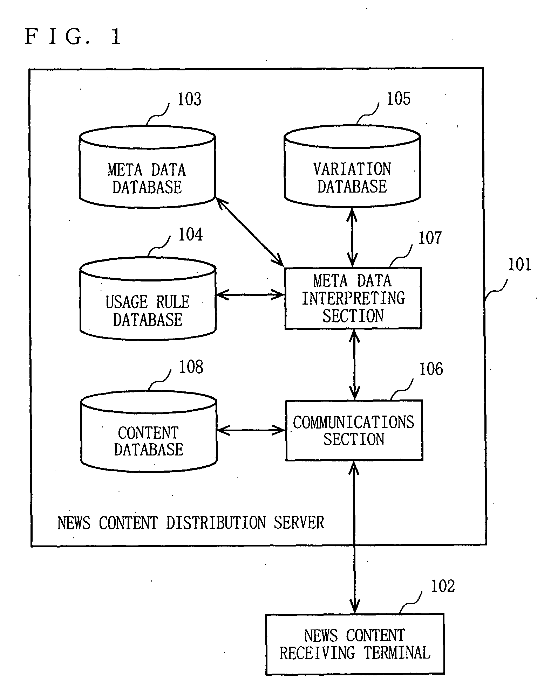

FIG. 1 is a block diagram illustrating the configuration of a news content distribution system according to a first embodiment of the present invention. In FIG. 1, the news content distribution system includes a news content distribution server 101 and a news content receiving terminal 102. The news content distribution server 101 includes a meta data database 103, a usage rule database 104, a variation database 105, a communications section 106, a meta data interpreting section 107, and a content database 108. The operation of each component is described below.

### <News content distribution server 101>

In response to a request for a specific content from the news content receiving terminal 102, the news content distribution server 101 transmits the specific content to the news content receiving terminal 102. Note that, in the present embodiment, the content request is represented by a set of (" content identifier", "receiving terminal capability level"). Here, the content identifier is information for uniquely identifying a content to be transmitted from the news content distribution server 101 to the news content receiving terminal 102. The receiving terminal capability level is, on the other hand, a level of display capability. In the present embodiment, Level 1 indicates a terminal capable of displaying video; Level 2 indicates a terminal capable of displaying only text; and Level 3 indicates a terminal capable of only producing audio.

The news content distribution sever 101 may distribute contents to the news content receiving terminal 102 through broadcasting, or via a network such as the Internet. Here, assume that each content is protected by copyright, and is provided with a usage rule. Also assume that each content has its own content identifier.

### <Copyright protection scheme in content distribution service>

An example copyright protection scheme is as follows. First, news contents are encrypted with each different secret key in symmetric key cryptography, and are then transmitted to the news content receiving terminal 102. The secret key is hereinafter referred to as a content key Kc. A content identifier Ic, the content key Kc, and a usage rule Uc of the content are encrypted with a public key of the news content receiving terminal 102 in asymmetric key cryptography, and hereinafter collectively called a ticket Tc. The ticket Tc is required for using the content because the content key Kc for decoding the content is included in the ticket Tc. The ticket Tc is sent to the news content receiving terminal 102 when a content purchasing process is completed.

The ticket Tc is encrypted with the public key of the news content receiving terminal 102, and therefore can be decrypted only by the news content receiving terminal 102. An encryption scheme for the ticket Tc may be the one using the symmetric key cryptography. Also in this case, the ticket Tc can be decoded only by the news content receiving terminal 102 using the secret key of the news content receiving terminal 102 for encryption.

### <Specific example of the ticket Tc>

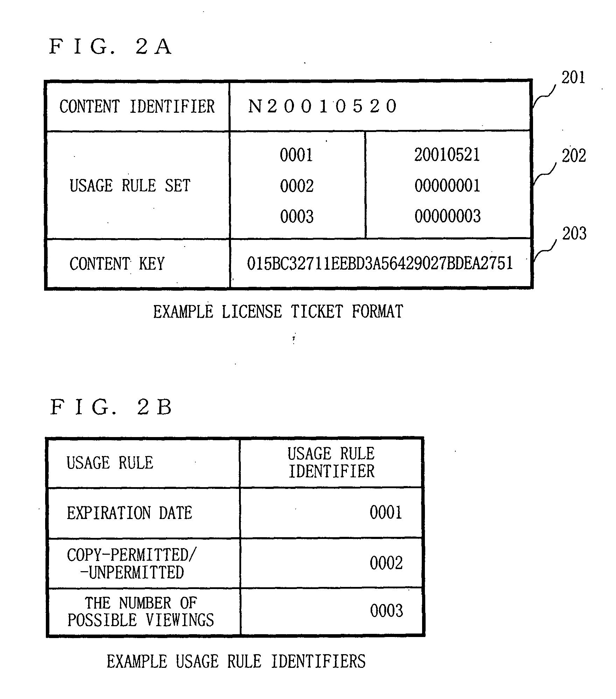

An example format of the ticket Tc is illustrated in FIG. 2A. The ticket Tc includes a content identifier 201, a usage rule set 202, and a content key 203. The content identifier 201 is to uniquely identify the content, having "N20010520" described therein, as illustrated in FIG. 2A. The usage rule set 202 has a plurality of predetermined usage rules with usage rule identifiers respectively provided thereto for use in designation of one or more usage rules . Each usage rule has an attribute value. In FIG. 2A, the usage rule set has three usage rules. Their usage rule identifiers are "0001", "0002", and "0003", and their attribute values are "20010521", "00000001", and "00000003", respectively.

Each usage rule corresponds to its unique usage rule identifier, as illustrated in FIG. 2B. That is, a usage rule "expiration date" corresponds to the usage rule identifier "0001", a usage rule "copy-permitted" corresponds to the usage rule identifier "0002", and a usage rule "the number of possible viewings" corresponds to the usage rule identifier "0003".

With reference to FIG. 2A, described below are the attribute values of the usage rules. For example, the usage rule "expiration date" represented by the usage rule identifier "0001" has an attribute value in BCD (Binary-Coded Decimal) indicating a date until when the content is usable. In FIG. 2A, "20010521" is described as the attribute value, indicating that the content is usable until May 21, 2001. The usage rule "copy-permitted" represented by the usage rule identifier "0002" has an attribute value indicating whether the content is copy-permitted and, if copy-permitted, how many times the content is copy-permitted. "0" is described as the attribute value if the content is not copy-permitted. In FIG. 2A, "00000001" is described as the attribute value, indicating that the content is copy-permitted once. The usage rule "the number of possible viewings" represented by the usage rule identifier "0003" has an attribute value indicating whether the content is viewable and, if viewable, how many times the content is viewable. In FIG. 2A, "00000003" is described as the attribute value, indicating that the content is viewable three times.

### <News content receiving terminal 102>

The news content receiving terminal 102 can transmit, to the news content distribution server 101, the request for a news content specified by the user and the terminal capability level of its own, and can play back the received news content according to the usage rule. The news content receiving terminal 102 falls into any one of three level types according to the display capability. In the present embodiment, Level 1 indicates a terminal capable of displaying video; Level 2 indicates a terminal capable of displaying only text; and Level 3 indicates a terminal capable of only producing audio.

### <Meta data database 103>

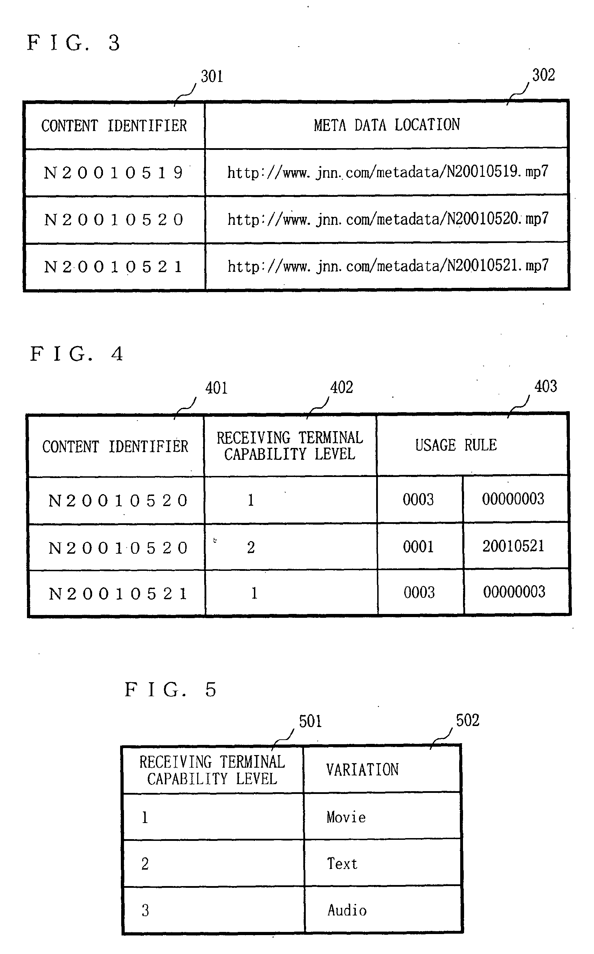

The meta data database 103 is a database for managing meta data of the contents distributable from the news content distribution server 101. This database manages data exemplarily illustrated in FIG. 3, including content identifiers 301 and meta data locations 302. That is, the meta data database 103 holds the content identifiers of the news contents and also the locations of their meta data represented in URL (Uniform Resource Locator) format. In the example of FIG. 3, a content identifier "N20010519" corresponds to meta data located at "http://www.jnn.com/metadata/N200010519.mp7". A content identifier "N20010520" corresponds to meta data located at "http://www.jnn.com/metadata/N20010520.mp7". A content identifier "N20010521" corresponds to meta data located at "http://www.jnn.com/metadata/N20010521.mp7".

### <Usage rule database 104>

The usage rule database 104 is a database for managing the usage rules of the news contents for every set of the distributable news content and the capability level of the news content receiving terminal 102. Example data managed by the usage rule database 104 is illustrated in FIG. 4. In FIG. 4, the data includes content identifiers 401, receiving terminal capability levels 402, and usage rules 403. In the example data illustrated in FIG. 4, the news content represented by the content identifier "N20010520" with the capability level "1" corresponds to the usage rule "the number of possible viewings" represented by the usage rule identifier "0003", whose attribute value indicates "viewable three times". Furthermore, the news content represented by the content identifier "N20010520" with the capability level "2" corresponds to the usage rule "expiration date" represented by the usage rule identifier "0001", whose attribute value indicates "viewable until May 21, 2001". Still further, the news content represented by the content identifier "N20010521" with the capability level "1" corresponds to the usage rule "the number of possible viewings" represented by the usage rule identifier "0003", whose attribute value indicates "viewable three times". In the example of FIG. 4, the set of the distributable news content and the capability level of the news content receiving terminal 102 corresponds to only one usage rule. Alternatively, every set may correspond to a plurality of usage rules.

### <Variation database 105>

The variation database 105 is a database for managing variations of the distributable content for every capability level of the news content receiving terminal 102. Example data managed by the variation database 105 is illustrated in FIG. 5. In FIG. 5, the data includes receiving terminal capability levels 501 and variations 502. The variations 502 are represented by variation representation tags in the meta data. The example data of FIG. 5 holds such information as that terminals at Level 1 are provided with video; those at Level 2 with text; and those at Level 3 with audio.

### <Communications section 106>

The communications section 106 is a module implementing network protocols for exchanging data through a network. The communications section 106 implements a protocol for receiving a request for a specific content from the news content receiving terminal 102 and a protocol for distributing the requested content and its usage rule to the news content receiving terminal 102. These two protocols use the SSL (Security Socket Layer) protocol generally used over the Internet. The SSL protocol has been publicized in a technical document "The SSL Protocol Version 3.0" by Netscape Communications Corporation, and therefore is not described in detail herein. With this SSL protocol, the news content receiving terminal 102 and the news content distribution server 101 verify each other, and encrypt data to be exchanged with a session key predetermined for each session for secret communications. The protocol used between the news content receiving terminal 102 and the news content distribution server 101 is not limited to SSL, but may be any other protocol functionally equivalent to or more sophisticated than SSL.

### <Meta data interpreting section 107>

The meta data interpreting section 107 can interpret the meta data contained in the meta data database 103 for receiving data details from respective items described in the meta data. By way of example only, when the meta data is described in MPEG-7 format as in the present embodiment, the meta data interpreting section 107 receives the meta data as an input, and outputs the data details described between tags (<MediaUri> tags, for example) in the meta data. Thus, the news content distribution server 101 can extract the data details described in the meta data.

### <Content database 108>

The content database 108 manages the news contents distributable from the news content distribution server 101 to the news content receiving terminal 102. In the present embodiment, the news contents are stored in a file system of the news content distribution server 101, and are identified by their file names.

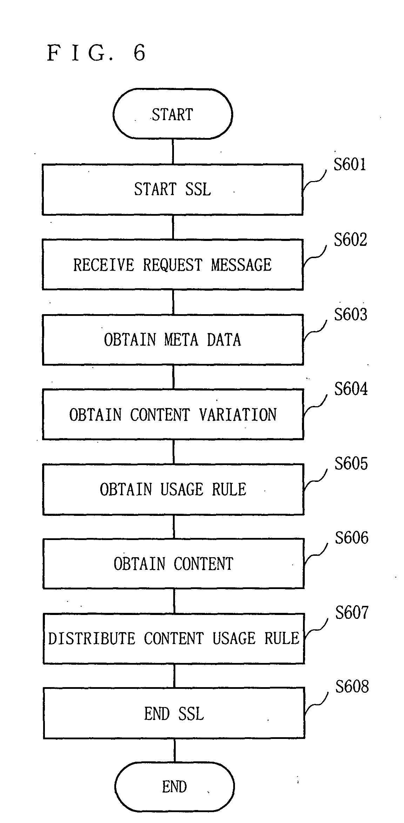

With reference to a flowchart of FIG. 6, described is a process of distributing a news content in the above-configured news content distribution system.

### (Step S601)

The news content distribution server 101 uses the SSL protocol to mutually verify the news content receiving terminal 102, and generates a session key for secret communications subsequently performed. Communications data exchanged in steps S602 and S607 is encrypted with this session key.

### (Step S602)

The news content distribution server 101 receives a content request (request message) from the news content receiving terminal 102. The request message is composed of a set of ("content identifier", "receiving terminal capability level"). Here, the content identifier of the content specified by the request message is denoted by Ic (its value is N20010520), and the receiving terminal capability level is denoted by L (its value is 2).

### (Step S603)

The news content distribution server 101 obtains, from the meta data database 103, the meta data of the news content corresponding to the received content request. For obtaining the meta data, the received content identifier Ic is used. For example, in the case of the meta data database illustrated in FIG. 3, when the content identifier Ic is "N20010520", the location of the corresponding meta data is "http://www.jnn.com/metadata/N20010520.mp7". Therefore, the meta data is obtained from that location. The obtained meta data is exemplarily illustrated in FIG. 11.

### (Step S604)

The news content distribution server 101 obtains, from the variation database 105, a content variation corresponding to the received capability level L. For example, in the case of the variation database illustrated in FIG. 5, the capability level specified by the request message is "2". Therefore, the content variation to be distributed is "Text".

### (Step S605)

The content distribution server 101 obtains, from the usage rule database 104, the usage rule corresponding to the content variation obtained in step S604. For example, in the case of the usage rule database illustrated in FIG. 4, the content identifier Ic is "N20010521" and the capability level is "2". Therefore, the usage rule to be distributed is "viewable until May 21, 2001".

### (Step S606)

The content distribution server 101 uses the meta data interpreting section 107 to obtain, from the meta data obtained in step S603, the location of the content variation obtained in step S604. In the present embodiment, the content variation obtained in step S604 is "Text". As illustrated in FIG. 11, sandwiched between the <Text> tags in the meta data obtained in step S603 are <MediaUri> tags having the location of the content variation described therebetween. That is, the variation of the specified news content is stored in a file "/Contents/News/News20010520.txt".

### (Step S607)

The news content distribution server 101 distributes, to the news content receiving terminal 102, the usage rule obtained in step S605 and the variation of the news content obtained in step S606. The usage rule is distributed in ticket format as illustrated in FIG. 2A. The ticket is composed of the content identifier, the usage rule set, and the content key. The variation of the news content to be distributed is encrypted with the content key contained in the ticket.

### (Step S608)

After the news content and the usage rule have been completely received from the news content distribution server 101, the news content receiving terminal 102 ends this SSL session established in step S601.

As described above, the news content distribution server 101 uses the meta data provided to the distributable news content, and the capability level received from the news content receiving terminal 102. Therefore, the usage rule can be distributed according to the capability level of the news content receiving terminal 102.

Note that the above-stated components may be implemented by hardware or software.

Also, the above-stated meta data may be of any type as long as it has similar representations described therein.

Furthermore, in the present embodiment, to the news content receiving terminal 102, the news content and its usage rule are distributed simultaneously. This is not restrictive, and the news content receiving terminal 102 may receive them separately by transmitting requests for the news content and the usage rule separately. Also in this case, each request specifies ("content identifier", "receiving terminal capability level").

Still further, in the present embodiment, level values are used for representing the receiving terminal capability levels. Alternatively, for example, a specific capability value, such as "image display capability = none, screen size = 20 × 20", may be received from the news content receiving terminal 102.

Still further, in the present embodiment, the meta data database 103 contains the location of the meta data. Alternatively, the meta data database 103 may contain the meta data itself.

### (Second embodiment)

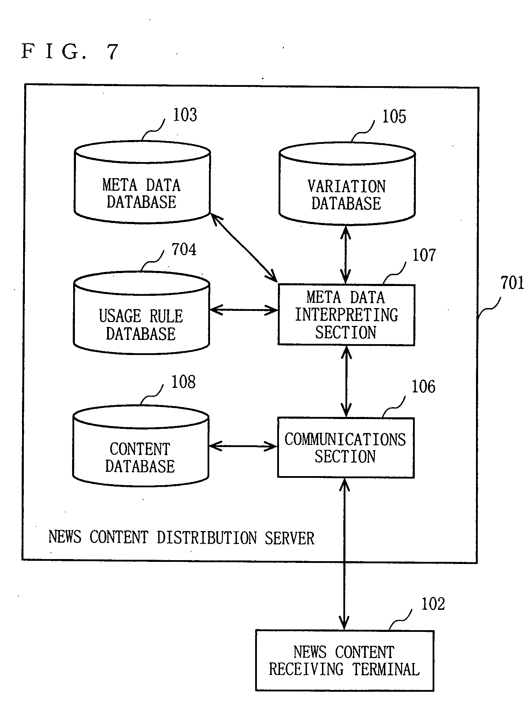

FIG. 7 is a block diagram illustrating the configuration of a news content distribution system according to a second embodiment of the present invention. In FIG. 7, the news content distribution system includes a news content distribution server 701 and the news content receiving server 102. The news content distribution server 701 includes the meta data database 103, a usage rule database 704, the variation database 105, the communications section 106, the meta data interpreting section 107, and the content database 108. Note that the components similar in structure to those in FIG. 1 are provided with the same reference numerals, and are not described herein.

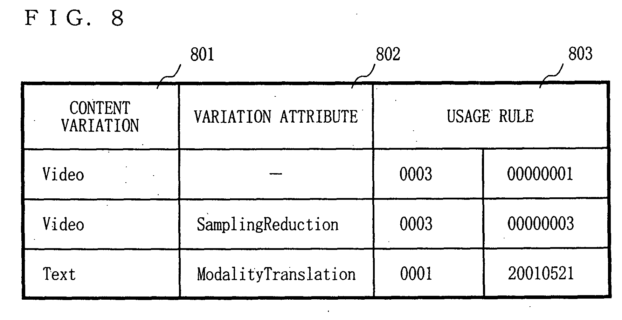

The usage rule database 704 is a database for managing usage rules of respective distributable news contents for every set of a content variation and its variation attribute. The variation attribute is information indicative of how the content variation is related to the original news content, and will be described later in detail. Example data managed by the usage rule database 704 is illustrated in FIG. 8. In FIG. 8, the data includes content variations 801, variation attributes 802, and usage rules 803. In the example data of FIG. 8, the content variation "Video" with its variation attribute unspecified corresponds to the usage rule "the number of possible viewings" represented by the usage rule identifier "0003", whose attribute value indicates "viewable once". Furthermore, the content variation "Video" with its variation attribute "SamplingReduction" corresponds to the usage rule "the number of possible viewings" represented by the usage rule identifier "0003", whose attribute value indicates "viewable three times". Here, "SamplingReduction" indicates a process for reducing sampling points of audio or video without reducing its playback time. In this process, for example, a video frame rate is reduced from 30 frames per second to 15 frames per second. Still further, the content variation "Text" with its variation attribute "ModalityTranslation" corresponds to the usage rule "expiration date" represented by the usage rule identifier "0001", whose attribute value indicates "viewable until May 21, 2001". Here, "ModalityTranslation" indicates a process for translating multimedia from one form (still picture, video, text, audio, etc.) to another. In the example of FIG. 8, the set of the variation of the distributable news content and the variation attribute corresponds to only one usage rule. Alternatively, every set may correspond to a plurality of usage rules.

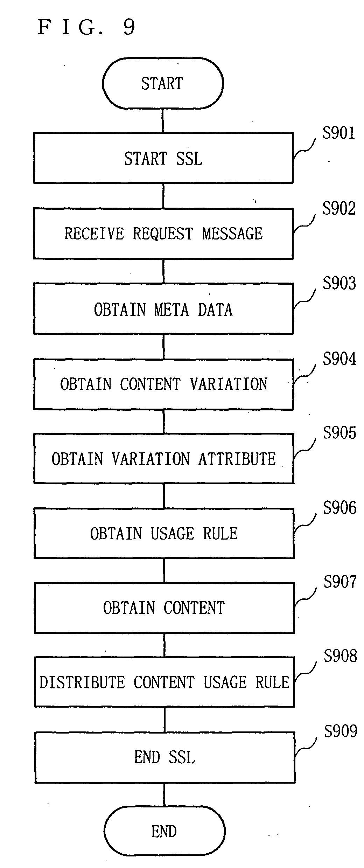

With reference to a flowchart of FIG. 9, described is a process of distributing a news content in the above-configured news content distribution system.

### (Step S901)

The news content distribution server 701 uses the SSL protocol to mutually verify the news content receiving terminal 102, and generates a session key for secret communications subsequently performed. Communications data exchanged in steps S902 and S908 is encrypted with this session key.

### (Step S902)

The news content distribution server 701 receives a content request (request message) from the news content receiving terminal 102. The request message is composed of a set of ("content identifier", "receiving terminal capability level"). Here, the content identifier of the content specified by the request message is denoted by Ic (its value is N20010520), and the receiving terminal capability level is denoted by L (its value is 2).

### (Step S903)

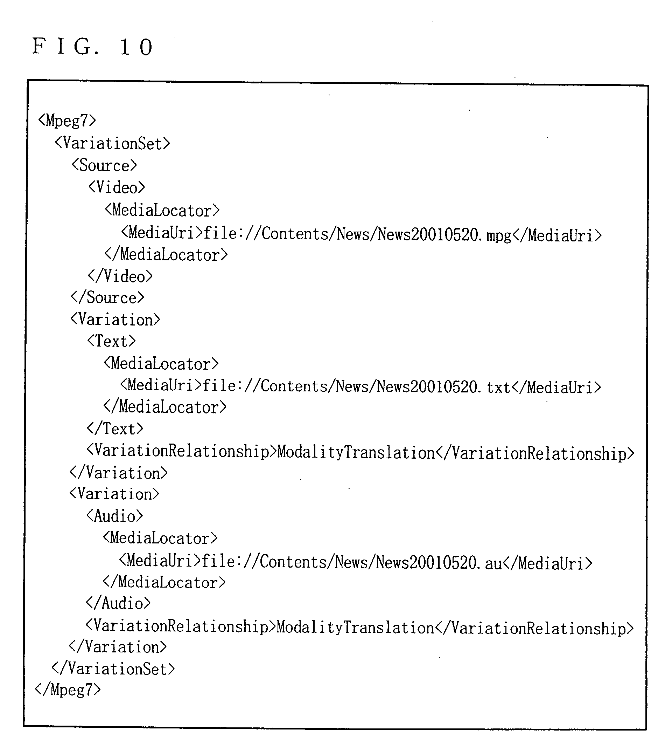

The news content distribution server 701 obtains, from the meta data database 103, the meta data of the news content corresponding to the received content request. For obtaining the meta data, the received content identifier Ic is used. For example, in the case of the meta data database illustrated in FIG. 3, when the content identifier Ic is "N20010520", the location of the corresponding meta data is "http://www.jnn.com/metadata/N20010520.mp7". Therefore, the meta data is obtained from that location. The obtained meta data is exemplarily illustrated in FIG. 10.

### (Step S904)

The news content distribution server 701 obtains, from the variation database 105, a content variation corresponding to the received capability level L. For example, in the case of the variation database illustrated in FIG. 5, the capability level specified by the request message is "2". Therefore, the content variation to be distributed is "Text".

### (Step S905)

The content distribution server 701 uses the meta data interpreting section 107 to interpret the meta data obtained in step S903, thereby extracting a variation attribute corresponding to the content variation obtained in step S904. An extraction scheme is as follows.
(1) First, the meta data obtained in step S903 is interpreted by the meta data interpreting section 107 for extracting description of the content variation "Text" obtained in step S904. Specifically, from the meta data of the variations sandwiched between the <Variation> tags, description sandwiched between the <Text> tags is extracted.
(2) Then, from the extracted data, details described between <VariationRelationShip> tags are extracted. In the case of the example meta data of FIG. 10, the variation attribute to be extracted is "ModalityTranslation".

### (Step S906)

The content distribution server 701 obtains, from the usage rule database 704, the usage rule corresponding to the content variation obtained in step S904 and the variation attribute obtained in step S905. Here, the content variation is "Text", and the variation attribute is "ModalityTranslation". Therefore, in the case of the example usage rule database illustrated in FIG. 8, the usage rule to be distributed is "viewable until May 21, 2001". In the present example, described is a case where the variation attribute is specified. If no variation attribute is specified, the usage rule corresponding to a variation attribute "unspecified" is obtained. For example, if the content variation is "Video" and the variation attribute is "unspecified", the usage rule to be distributed is "viewable once", based on the usage rule database illustrated in FIG. 8.

### (Step S907)

The content distribution server 701 uses the meta data interpreting section 107 to obtain, from the meta data obtained in step S903, the location of the content variation obtained in step S904. In the present embodiment, the content variation obtained in step S904 is "Text". As illustrated in FIG. 10, sandwiched between the <Text> tags in the meta data obtained in step S903 are <MediaUri> tags having the location of the content variation described therebetween. That is, the variation of the specified news content is contained in a file "/Contents/News/News 20010520.txt".

### (Step S908)

The news content distribution server 701 distributes, to the news content receiving terminal 102, the usage rule obtained in step S906 and the variation of the news content obtained in step S907. The usage rule is distributed in ticket format as illustrated in FIG. 2A. The ticket is composed of the content identifier, the usage rule set, and the content key. The variation of the news content to be distributed is encrypted with the content key contained in the ticket.

### (Step S909)

After the news content and the usage rule have been completely received from the news content distribution server 701, the news content receiving terminal 102 ends this SSL session established in step S601.

As described above, the news content distribution server 701 can distribute the usage rule to the news content receiving terminal 102 according to the meta data provided to the distributable news content, more specifically, according to the variation attribute. In the second embodiment, unlike the first embodiment, the usage rule does not have to be set for each variation of the content. Therefore, the usage rule can be set in a simpler manner.

Note that the above-stated components may be implemented by hardware or software.

Also, the above-stated meta data, variation, and variation attribute may be of any type as long as they have similar representations described therein.

Furthermore, in the present embodiment, the news content receiving terminal 102 receives the news content and its usage rule simultaneously. This is not restrictive, and the news content receiving terminal 102 may receive them separately by transmitting requests for the news content and the usage rule separately. Also in this case, each request specifies ("content identifier", "receiving terminal capability level").

Still further, in the present embodiment, level values are used for representing the receiving terminal capability levels. Alternatively, for example, a specific capability value, such as "image display capability = none, screen size = 20 × 20", may be received from the news content receiving terminal 102.

Still further, in the present embodiment, the meta data database 103 contains the location of the meta data. Alternatively, the meta data database 103 may contain the meta data itself.

Still further, when the above-stated meta data is in MPEG-7 format, the usage rule can be set for each group of variation attributes as defined in MPEG-7, or for every variation attribute. Shown below are example groups of variation attributes and usage rules set therefor. For details of each variation attribute, the MPEG-7 specifications are referred to.

### · A group related to summarization and extraction (Summarization, Abstraction, Extraction, etc.)

This group includes variations such as a highlight scene and a digest. For example, the usage rule to be set is that the content is copy-permitted only once for publicity of a highlight content.

### · A group related to translation (ModalityTranslation, LanguageTranslation, etc.)

This group includes variations such as media translation and language translation. For example, when video is translated into still pictures, the usage rule is changed from "expiration date" to "the number of possible viewings". In another example, when to start using the content is changed based on the language. For example, as illustrated in FIG. 8, the usage rule "the number of possible viewings" for the original video content is changed to "expiration date" for its variation, that is, text.

### · A group related to reduction (ColorReduction, SpatialReduction, TemporalReduction, SamplingReduction, RateReduction, QualityReduction, Compression, Scaling, etc.)

This group includes variations for reducing quality of the content, such as color reduction and scaling-down of the size. For example, to prevent distribution of a content reduced in quality, the usage rule that does not permit copy is set. Also, by way of example only, as illustrated in FIG. 8, for the content reduced in quality, a larger number of possible viewings can be set as the usage rule, compared with the number of possible viewings set for the original content.

### · A group related to others (Revision, Substitution, Replay, AlternativeView, AlternativeMediaProfile, etc.)

This group includes variations such as other versions of the content. For example, the usage rule is so set as that the number of times of possible use for the new version is larger than that for the older one.

In the above-stated first and second embodiments, the systems for distributing news contents have been described. The present invention can also be applied to a system for distributing contents other than news contents.

While the invention has been described in detail, the foregoing description is in all aspects illustrative and not restrictive. It is understood that numerous other modifications and variations can be devised without departing from the scope of the invention.

## Claims

1. A content distribution apparatus for distributing a content and a usage rule of the content to a content receiving terminal (102), wherein
the content has a plurality of variations, and
the content distribution apparatus comprises:
a content managing section (108) operable to manage the content;
a usage rule managing section (104) operable to manage the usage rule of the content; and
a communications section (106) operable to distribute, to the content receiving terminal, a predetermined one the variations of the content managed by the content management section and the usage rule dynamically determined according to the predetermined variation.

2. The content distribution apparatus according to claim 1, wherein
the usage rule managing section manages the usage rule for each capability level of the content receiving terminal, and
the communications section distributes, to the content receiving terminal, the usage rule corresponding to the capability level of the content receiving terminal.

3. The content distribution apparatus according to claim 1, wherein
the usage rule managing section manages the usage rule for each variation attribute indicating how the variation is related to the content, and
the communications section distributes, to the content receiving terminal, the usage rule corresponding to the variation attribute of the predetermined variation.

4. The content distribution apparatus according to claim 1, further comprising
a meta data managing section (103) operable to manage meta data indicating how the content is related to the plurality of variations, wherein
the variation to be distributed to the content receiving terminal is determined based on the meta data.

5. The content distribution apparatus according to claim 4, wherein
the meta data (FIG. 10) complies with MPEG-7 standards, and
the variation to be distributed to the content receiving terminal is determined based on details described between variation tags in the meta data.

6. The content distribution apparatus according to claim 3, further comprising
a meta data managing section operable to manage meta data indicating how the content is related to the plurality of variations, wherein
the meta data (FIG. 11) complies with MPEG-7 standards, and
the variation to be distributed to the content receiving terminal is determined based on a variation attribute indicated between variation attribute tags in the meta data.

7. A content distribution method of distributing a content and a usage rule of the content to a content receiving terminal, wherein
the content has a plurality of variations, and
the content distribution method comprises:
a content managing step of managing the content;
a usage rule managing step of manage the usage rule of the content; and
a communicating step of distributing, to the content receiving terminal, a predetermined one of the variations of the content managed in the content management step and the usage rule dynamically determined according to the predetermined variation.

8. The content distribution method according to claim 7, wherein
in the usage rule managing step, the usage rule is managed for each capability level of the content receiving terminal, and
in the communicating step, the usage rule corresponding to the capability level of the content receiving terminal is distributed to the content receiving terminal.

9. The content distribution method according to claim 7, wherein
in the usage rule managing step, the usage rule is managed for each variation attribute indicating how the variation is related to the content, and
in the communicating step, the usage rule corresponding to the variation attribute of the predetermined variation is distributed to the content receiving terminal.

10. The content distribution method according to claim 7, further comprising
a meta data managing step of managing meta data indicating how the content is related to the plurality of variations, wherein
the variation to be distributed to the content receiving terminal is determined based on the meta data.

11. The content distribution method according to claim 10, wherein
the meta data complies with MPEG-7 standards, and
the variation to be distributed to the content receiving terminal is determined based on details described between variations tags in the meta data.

12. The content distribution method according to claim 9, further comprising
a meta data managing step of managing meta data indicating how the content is related to the plurality of variations, wherein
the meta data complies with MPEG-7 standards, and
the variation to be distributed to the content receiving terminal is determined based on a variation attribute indicated between variation attribute tags in the meta data.

13. A content distribution program executed by a computer for distributing a content having a plurality of variations and a usage rule of the content to a content receiving terminal, the program comprising:
a content managing step of managing the content;
a usage rule managing step of manage the usage rule of the content; and
a communicating step of distributing, to the content receiving terminal, a predetermined one of the variations of the content managed in the content management step and the usage rule dynamically determined according to the predetermined variation.
